Europäisches Patentamt

European Patent Office

Office européen des brevets

(19)

(11) **EP 0 835 802 B1**

(12) **FASCICULE DE BREVET EUROPEEN**

(45) Date de publication et mention
de la délivrance du brevet:
**04.06.2003   Bulletin 2003/23**

(51) Int Cl.⁷: **B64C 13/12**

(21) Numéro de dépôt: **97402398.8**

(22) Date de dépôt: **13.10.1997**

(54) **Dispositif d'aide au pilotage sur un aéronef à commande de vol électrique**

Steuerungshilfevorrichtung für ein Flugzeug mit einem elektrischen Flugsteuerungssystem

Pilloting aid device for fly-by-wire aircraft

(84) Etats contractants désignés:
**DE GB**

(30) Priorité: **14.10.1996  FR 9612482**

(43) Date de publication de la demande:
**15.04.1998   Bulletin 1998/16**

(73) Titulaire: **AEROSPATIALE MATRA**
**75016 Paris (FR)**

(72) Inventeurs:
 • **Todeschi, Michel**
  **31770 Colomiers (FR)**
 • **Andrieu, Laurent**
  **31140 Aucamville (FR)**
 • **Vollard, Cécile**
  **31000 Toulouse (FR)**
 • **Perie, Jean-Claude**
  **31330 Grenade (FR)**

(74) Mandataire: **Bonnetat, Christian**
**CABINET BONNETAT**
**29, rue de St. Pétersbourg**
**75008 Paris (FR)**

(56) Documents cités:
  **EP-A- 0 204 598**        **EP-A- 0 384 806**
  **GB-A- 1 476 402**

 • **HEGG J W ET AL: "FEATURES OF ACTIVE
  SIDESTICK CONTROLLERS" DIGITAL
  AVIONICS SYSTEMS CONFERENCE, PHOENIX,
  OCT. 30 - NOV. 3, 1994, no. CONF. 13, 30 octobre
  1994, INSTITUTE OF ELECTRICAL AND
  ELECTRONICS ENGINEERS, pages 305-308,
  XP000512886**
 • **SUMMERS L.G., SHANNON J.H., WHITE T.R.,
  SHINER R.J.: 'Fly-by-Wire Sidestick Controller
  Evaluation' SAE TECHNICAL PAPER SERIES
  871761, AEROSPACE TECHNOLOGY
  CONFERENCE AND EXPOSITION 05 Octobre
  1987 - 08 Octobre 1987, LONG BEACH, CA**

**Description**

La présente invention concerne un dispositif d'aide au pilotage sur un aéronef à commande de vol électrique.

Bien que non exclusivement, le dispositif de l'invention s'applique plus particulièrement à un aéronef, par exemple un avion de transport civil, comportant un manche de commande du pilote et un manche de commande du copilote, mécaniquement indépendants. De façon connue, chacun desdits manches de commande peut généralement être pivoté autour de deux axes de commande pour piloter l'aéronef respectivement en roulis et en tangage.

Un tel dispositif est connude EP-A-0 384 806.

On sait en outre que les rôles sont parfaitement définis dans le poste de pilotage d'un tel aéronef de sorte qu'en principe un seul pilote (du pilote ou du copilote) est au commande de l'aéronef et actionne son manche de commande.

Toutefois, il peut arriver, notamment lors de manoeuvres difficiles ou de situations de pilotage complexes dans lesquelles l'attention desdits pilotes est essentiellement concentrée sur les opérations à réaliser, que les deux pilotes actionnent simultanément leur manche de commande, ce qui a pour effet un double pilotage engendrant des ordres de pilotage différents, voire contradictoires.

Pour éviter une telle situation, susceptible d'avoir des conséquences dommageables, il est nécessaire que les pilotes puissent reconnaître rapidement tout double pilotage. De façon usuelle, pour des manches de commande non couplés mécaniquement, c'est-à-dire dont les mouvements sont indépendants l'un de l'autre, comme cela est envisagé dans la présente invention, la reconnaissance d'un double pilotage par l'un des pilotes est réalisée :

- soit visuellement, en observant le manche de commande de l'autre pilote, des écrans de contrôle ou des indicateurs visuels ;
- soit par l'analyse du comportement de l'aéronef ou de divers systèmes montés sur l'aéronef.

De telles solutions usuelles ne sont pas pleinement satisfaisantes puisque :

- elles ne sont pas précises ;
- elles sont entièrement dépendantes des observations des pilotes ;
- elles détournent la vue et l'attention de ces pilotes des tâches ou des opérations qu'ils sont en train de réaliser ; et
- elles nécessitent de plus une attention constante.

La présente invention a pour objet de remédier à ces inconvénients. Elle concerne un dispositif d'aide au pilotage qui permet d'indiquer, de façon précise et non équivoque, aux pilotes d'un aéronef, l'existence d'un pilotage multiple, par exemple un double pilotage, sans pour autant détourner leur attention du pilotage ou des manoeuvres devant être réalisées.

A cet effet, l'invention concerne un dispositif avec les caractéristiques selon la revendication 1.

Ainsi, grâce à l'invention, les pilotes de l'aéronef sont informés le cas échéant précisément et de façon non équivoque, par une sensation tactile ressentie dans le manche de commande qu'ils actionnent, de tout pilotage multiple, en particulier de tout double pilotage dans le cas d'un pilotage à deux pilotes.

Par conséquent, lesdits pilotes sont en mesure d'évaluer rapidement et exactement la situation réelle et de prendre les mesures qui s'imposent, sans pour autant détourner leur attention des opérations qu'ils sont le cas échéant en train de réaliser.

De plus, comme on le verra ci-dessous à partir de plusieurs exemples de réalisation, le dispositif conforme à l'invention peut être appliqué à des manches de commande existants, de type usuel, ce qui réduit bien entendu le coût dudit dispositif d'aide au pilotage.

La présente invention s'applique de préférence à un aéronef comportant une unité de calcul qui détermine des ordres de pilotage de l'aéronef à partir de signaux électriques, dont la valeur dépend des positions desdits manches de commande, qui peuvent être modifiées par l'actionnement de ces derniers.

Dans ce cas, de façon avantageuse, ledit système de détection détecte lesdits signaux électriques et détermine, en fonction de la valeur de ces signaux électriques, un éventuel pilotage multiple.

En outre, conformément à l'invention, les systèmes d'information peuvent être réalisés selon différents modes de réalisation, précisés ci-dessous.

Dans un premier mode de réalisation particulièrement avantageux de l'invention et susceptible d'être appliqué à tout aéronef du type précité, au moins l'un desdits systèmes d'information comporte un ensemble vibreur intégré dans le manche de commande associé et engendrant des vibrations dudit manche de commande lors d'un pilotage multiple.

Dans ce cas, de façon avantageuse :

- ledit ensemble vibreur comporte une masselotte susceptible d'être entraînée en rotation par un moteur électrique ; et
- on règle l'amplitude et la fréquence desdites vibrations en fonction de la vitesse de rotation dudit moteur électrique et de la masse de ladite masselotte.

En outre, des deuxième et troisième modes de réalisation des systèmes d'information s'appliquent à chaque fois à un aéronef qui comporte des manches de commande susceptibles d'être actionnés ou pivotés au moins autour d'un axe de commande, et dont chacun comprend au moins un moteur électrique qui engendre, en fonction d'un signal de commande, des sensations d'effort ressenties lors de l'actionnement dudit manche de commande autour dudit axe de commande.

Sur un tel aéronef, au moins l'un desdits systèmes d'information comporte :

- dans ledit deuxième mode de réalisation, un générateur de signal électrique qui engendre un signal électrique sinusoïdal, ledit signal électrique sinusoïdal étant superposé, lors d'un pilotage multiple, audit signal de commande du moteur électrique de sorte que ledit moteur électrique engendre alors, en plus desdites sensations d'effort, des vibrations dudit manche de commande ; et

- dans ledit troisième mode de réalisation, un générateur de gain qui engendre un gain, le signal de commande dudit moteur électrique étant multiplié par ledit gain, lors d'un pilotage multiple, de manière à obtenir alors une modification desdites sensations d'effort ressenties lors de l'actionnement du manche de commande correspondant.

Dans ce dernier cas, de préférence, ledit gain est calculé à partir de l'expression (1+x), dans laquelle :

- x est nul, lorsqu'au plus un seul desdits manches de commande est actionné ;
- x est compris entre 0 et -1, lorsqu'au moins deux manches de commande sont actionnés simultanément et dans le même sens ; et
- x est compris entre 0 et +1, lorsqu'au moins deux manches de commande sont actionnés simultanément, mais dans des sens contraires.

Par ailleurs, dans un quatrième mode de réalisation, au moins l'un desdits systèmes d'information comporte un organe actif qui engendre, lors d'un pilotage multiple, des sensations d'effort ressenties lors de l'actionnement du manche de commande correspondant, les sensations d'effort ressenties pour un manche de commande variant en fonction de la position d'un autre manche de commande.

Bien entendu, lorsque les manches de commande peuvent être actionnés autour de deux axes de commande différents, comme cela est généralement le cas pour le pilotage de l'aéronef, respectivement en roulis et en tangage, chaque système d'information considéré comporte :

- dans ledit troisième mode de réalisation, deux générateurs de gain ; et
- dans ledit quatrième mode de réalisation, deux organes actifs.

On notera qu'une telle duplication n'est pas nécessaire lorsque l'on engendre des vibrations dans les manches de commande, comme par exemple dans le second mode de réalisation précité.

Par ailleurs, afin d'améliorer l'information des pilotes lors d'un pilotage multiple, le dispositif conforme à l'invention comporte de plus un moyen de visualisation susceptible d'indiquer un pilotage multiple par l'intermédiaire de signes caractéristiques.

Les figures du dessin annexé feront bien comprendre comment l'invention peut être réalisée. Sur ces figures, des références identiques désignent des éléments semblables.

La figure 1 illustre schématiquement un dispositif d'aide au pilotage conforme à l'invention.

Les figures 2 à 5 montrent schématiquement des systèmes d'information d'un dispositif d'aide au pilotage conforme à l'invention, respectivement dans des premier, deuxième, troisième et quatrième modes de réalisation.

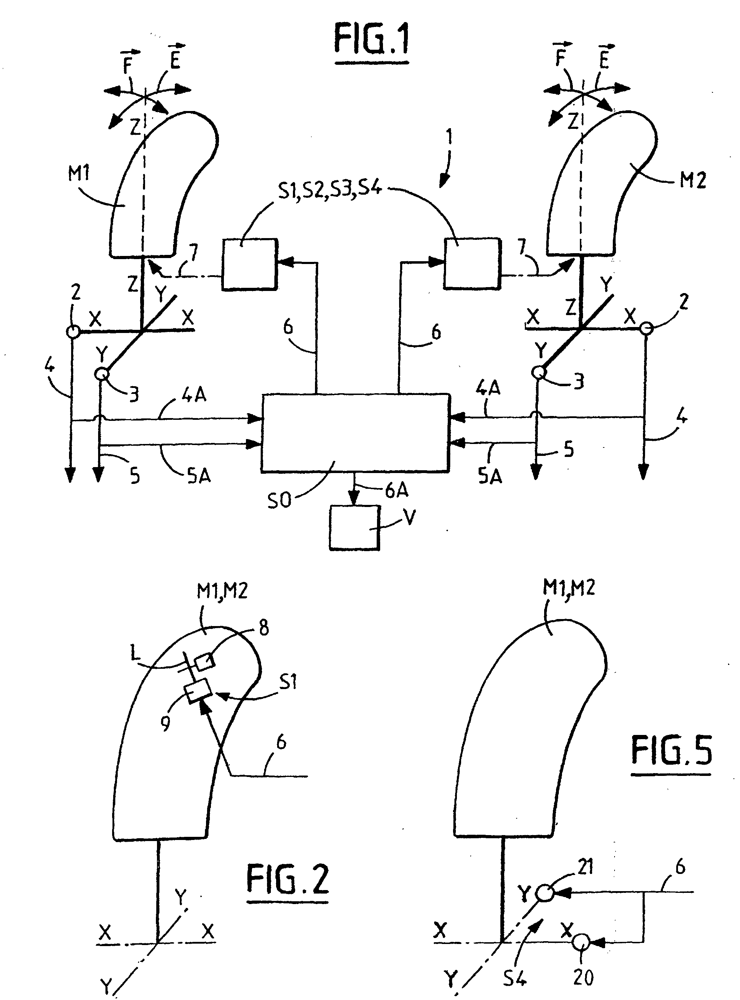

Le dispositif d'aide au pilotage 1 conforme à l'invention et représenté schématiquement sur la figure 1 est destiné à être monté sur un aéronef, par exemple un avion de transport civil, comportant un manche de commande M1 du pilote et un manche de commande M2 du copilote.

Lesdits manches de commande M1 et M2 sont réalisés sous forme de poignées actionnables manuellement, respectivement par le pilote et par le copilote de l'aéronef.

Pour piloter ledit aéronef en tangage et en roulis, lesdits manches de commande M1 et M2 qui sont orientés en position de repos, longitudinalement suivant un axe Z-Z, peuvent être manoeuvrés :

- d'une part, vers l'avant et vers l'arrière, comme indiqué par une double flèche $\vec{E}$ sur la figure 1, de manière à pivoter autour d'un axe X-X, ce qui permet de piloter l'aéronef en tangage ; et
- d'autre part, vers la droite et vers la gauche, comme indiqué par une double flèche $\vec{F}$, de manière à pivoter autour d'un axe Y-Y, ce qui permet de piloter l'aéronef en roulis.

De façon connue, à chacun desdits manches de commande M1 et M2 sont associés des capteurs 2 et 3 qui détectent la position du manche de commande correspondant, par rapport à la position de repos, respectivement autour des axes de commande X-X et Y-Y, ainsi que la vitesse d'actionnement dudit manche de commande.

Ces informations sont transmises, respectivement par l'intermédiaire de liaisons 4 et 5, sous forme de signaux électriques, à une unité de commande non représentée, qui détermine à partir de ces signaux électriques des ordres de pilotage transmis aux dispositifs de contrôle du vol de l'aéronef, également non représentés.

Les manches de commande M1 et M2, considérés dans la présente invention, sont de plus découplés mécaniquement l'un de l'autre de sorte que l'actionnement d'un desdits manches de commande M1 ou M2 ne provoque pas un mouvement similaire de suivi de l'autre manche de commande M2 ou M1.

Ainsi, il existe la possibilité que le pilote et le copilote actionnent tous deux simultanément leurs manches de commande M1 et M2, et ceci de plus de façon différente, voire de façon opposée. Pour éviter un tel problème, le dispositif d'aide au pilotage 1 conforme à l'invention est destiné à indiquer au pilote et au copilote tout pilotage multiple, en l'occurrence tout double pilotage, correspondant à l'actionnement simultané des deux manches de commande M1 et M2.

Pour ce faire, ledit dispositif 1 comporte, tel que représenté sur la figure 1 :

- un système SO de détection d'un double pilotage. Ledit système SO, qui est réalisé sous forme d'une unité de calcul, reçoit par l'intermédiaire de liaisons 4A et 5A reliées respectivement aux liaisons 4 et 5, les signaux électriques émis par les capteurs 2 et 3 des deux manches de commande M1 et M2 et détermine, en fonction de la valeur de ces signaux électriques, l'existence d'un double pilotage ; et
- deux systèmes d'information identiques, réalisés selon l'un des modes de réalisation S1 à S4 représentés respectivement sur les figures 2 à 5, reliés par l'intermédiaire de liaisons 6 au système de détection SO, associés respectivement auxdits manches de commande M1 et M2 et destinés à engendrer dans lesdits manches de commande M1 et M2, comme indiqué par des liaisons 7, lors d'un double pilotage détecté par ledit système de détection SO, une sensation tactile informant respectivement ledit pilote et ledit copilote du double pilotage.

Ainsi, grâce à l'invention, lors d'un double pilotage, le pilote et le copilote sont informés directement et de façon non équivoque, par la sensation tactile ressentie dans leurs manches de commande M1 et M2, du double pilotage, ce qui leur permet de prendre les mesures appropriées à cette situation.

De plus, ce mode d'indication conforme à l'invention ne détourne pas la concentration du pilote et du copilote des opérations qu'ils sont en train d'effectuer.

Afin d'améliorer l'indication du double pilotage, le dispositif 1 comporte de plus un moyen de visualisation V, par exemple un écran, relié par une liaison 6A au système de détection SO et indiquant par l'intermédiaire de signaux caractéristiques non représentés tout double pilotage.

Selon l'invention, ladite sensation tactile correspond :

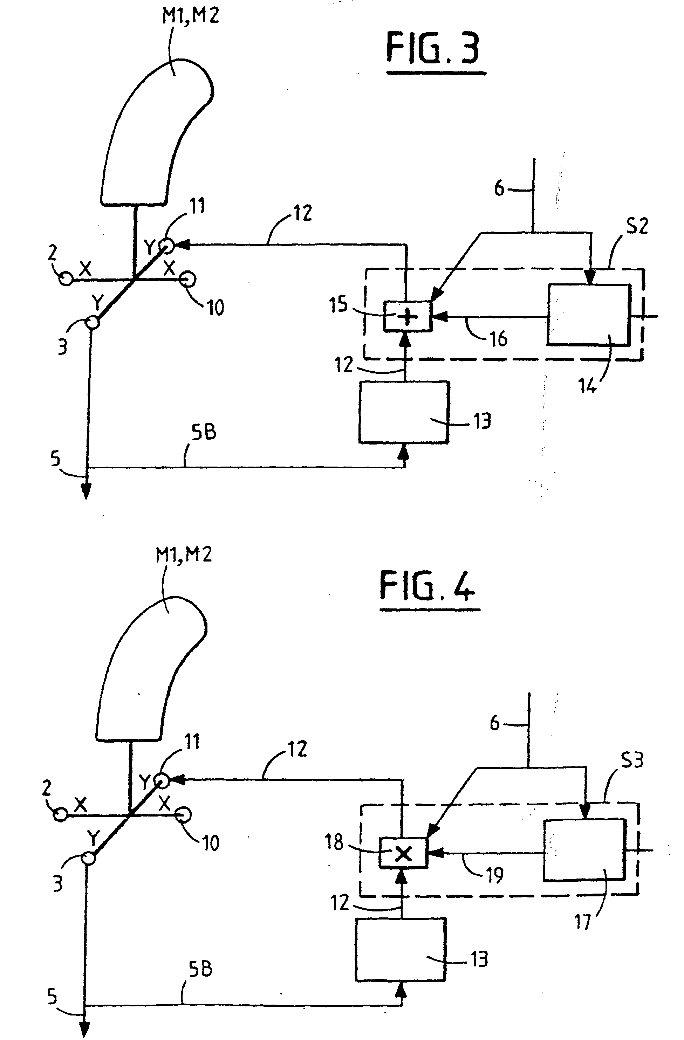

- soit à des vibrations caractéristiques engendrées dans lesdits manches de commande M1 et M2, comme cela est le cas pour les modes de réalisation précisés ci-dessous, en référence aux figures 2 et 3 ;
- soit à des sensations d'effort dues à une résistance à l'actionnement des manches de commande, comme cela est le cas pour les modes de réalisation précisés ci-dessous, en référence aux figures 4 et 5.

On notera que, sur les figures 2 à 5, pour des raisons de simplification du dessin, on a représenté à chaque fois uniquement l'un desdits deux systèmes d'information (associé à l'un desdits manches de commande M1, M2), l'autre étant réalisé de façon identique.

Toutefois, on notera qu'il est également envisageable, dans le cadre de la présente invention, de prévoir un dispositif 1 d'aide au pilotage comprenant deux systèmes d'information obtenus selon des modes de réalisation différents.

Dans un premier mode de réalisation représenté schématiquement sur la figure 2, ledit système d'information S1 comprend un ensemble vibreur agencé dans le manche de commande M1 ou M2 à proximité de la zone de préhension de ce dernier et comportant :

- une masselotte 8 susceptible de tourner autour d'un axe L ; et
- un moteur électrique 9 susceptible d'entraîner ladite masselotte 8 en rotation autour dudit axe L.

Par conséquent, en tournant autour de l'axe L, la masselotte 8 crée, par l'effet de balourd, des vibrations dans le manche de commande M1 ou M2, qui sont ressenties par le pilote ou le copilote.

L'amplitude et la fréquence des vibrations ainsi engendrées (qui peuvent être continues ou discontinues en fonction des informations à transmettre) peuvent être réglées en modifiant la vitesse de rotation du moteur électrique 9 et/ou la masse de la masselotte 8, ce qui permet d'engendrer des vibrations caractéristiques, c'est-à-dire qui présentent :

- une fréquence déterminée connue des pilotes ; et
- une amplitude appropriée, c'est-à-dire pas trop élevée pour ne pas gêner les pilotes dans leurs manoeuvres, mais suffisante pour que les vibrations soient parfaitement perçues par ces derniers.

Par ailleurs, on notera que le mode de réalisation de la figure 3 s'applique à un aéronef qui comporte des moteurs électriques 10 et 11, du type connu, associés au manche de commande M1 ou M2, solidaires du pivotement du manche de commande M1 ou M2 respectivement autour des axes de commande X-X et Y-Y, et engendrant des sensations d'effort lors du pivotement dudit manche de commande autour d'un desdits axes X-X et Y-Y, ressenties comme une résistance à l'actionnement.

Ledit moteur électrique 11 agit en fonction d'un signal électrique reçu par l'intermédiaire d'une liaison 12 d'une unité de commande 13.

Ladite unité de commande 13 est reliée par une liaison 5B à la liaison 5, à la sortie du capteur 3 et elle détermine le signal électrique de commande du moteur électrique 11, en fonction des informations reçues du capteur 3 et notamment de la position du manche de commande M1 ou M2.

Plus précisément, la résistance à l'actionnement du manche de commande M1 ou M2, engendrée par le moteur électrique 11, est fonction de l'écartement dudit manche de commandé de sa position de repos : plus il s'en écarte, plus la résistance est importante.

Une unité de commande, identique à l'unité de commande 13 et non représentée, est associée de la même manière au moteur électrique 10 et au capteur 2 pour le pivotement autour de l'axe X-X.

Dans ce cas, chacun desdits systèmes d'information S2 comporte, selon l'invention :

- un générateur de signal électrique 14 qui engendre un signal électrique sinusoïdal ; et
- un élément de calcul 15 relié au générateur 14 par une liaison 16, monté dans la liaison 12 et commandé par le système de détection SO par l'intermédiaire de la liaison 6.

Selon l'invention, ledit élément de calcul 15 est commandé par ledit système de détection SO de manière à superposer, lors d'un double pilotage, au signal de commande du moteur électrique 11 formé par l'unité de commande 13, le signal électrique sinusoïdal formé par le générateur 14, de sorte que ledit moteur électrique 11 engendre alors, en plus desdites sensations d'effort, des vibrations dudit manche de commande M1 ou M2.

Bien entendu, on peut régler l'amplitude et la fréquence des vibrations ainsi engendrées, en modifiant l'amplitude et la fréquence dudit signal électrique.

On notera de plus :

- que ledit système d'information S2 peut également être appliqué à l'unité de commande du moteur 10 ; mais
- qu'un seul système d'information S2 de ce type par manche de commande M1 ou M2 est suffisant.

Le mode de réalisation de la figure 4 est appliqué à un manche de commande M1 ou M2 identique à celui de la figure 3, décrit précédemment.

Dans ce cas, chacun desdits systèmes d'information S3 comporte un ensemble d'éléments associé à chaque axe de commande X-X ou Y-Y et comprenant à chaque fois, comme représenté uniquement pour l'axe de commande Y-Y :

- un générateur de gain 17 qui engendre un gain précisé ci-dessous ; et
- un élément de calcul 18 relié au générateur 17 par une liaison 19, monté dans la liaison 12 et commandé par le système de détection SO par l'intermédiaire de la liaison 6.

Selon l'invention, ledit élément de calcul 18 est commandé par ledit système de détection SO de manière à multiplier, lors d'un double pilotage, le signal de commande du moteur électrique 11 formé par l'unité de commande 13, par le gain formé par le générateur 17 de façon à obtenir alors une modification desdites sensations d'effort ressenties lors de l'actionnement du manche de commande M1 ou M2 correspondant.

De préférence, ledit gain est calculé par le générateur 17, à partir de l'expression (1+x), dans laquelle :

- x est nul, lorsqu'au plus un seul desdits manches de commande M1 et M2 est actionné ;
- x est compris entre 0 et -1, lorsque les deux manches de commande M1 et M2 sont actionnés dans le même sens ; et
- x est compris entre 0 et +1, lorsque les deux manches de commande M1 et M2 sont actionnés dans des sens contraires.

Par conséquent, grâce audit système d'information S3 :

- les sensations tactiles usuelles ne sont pas modifiées, tant qu'aucun double pilotage n'est détecté (gain=1) ;
- les sensations tactiles sont modifiées de manière à obtenir une résistance réduite à l'actionnement, lorsque les deux manches de commande M1 et M2 sont actionnés dans le même sens (gain<1) ; et
- les sensations tactiles sont modifiées de manière à obtenir une résistance accrue à l'actionnement, lorsque les deux manches de commande M1 et M2 sont actionnés dans des sens contraires (gain>1).

Par ailleurs, dans le mode de réalisation de la figure 5, chacun desdits systèmes d'information S4 comporte des organes actifs 20 et 21, par exemple des moteurs électriques, qui sont associés respectivement aux axes de commande X-X et Y-Y, et qui engendrent, lors d'un double pilotage, des sensations d'effort ressenties lors de l'actionnement du manche de commande M1 ou M2 autour de l'axe de commande correspondant, sous forme d'une résistance à l'actionnement.

De plus, selon l'invention, les sensations d'effort ressenties pour un manche de commande, par exemple M1, varient en fonction de la position de l'autre manche de commande, par exemple M2, autour du même axe de commande.

## Revendications

**1.** Dispositif d'aide au pilotage sur un aéronef à commande de vol électrique comportant au moins deux manches de commande (M1, M2) mécaniquement indépendants, chacun desdits manches de commande (M1, M2) pouvant être actionné pour piloter ledit aéronef, ledit dispositif comportant un système de détection (SO) d'un actionnement desdits manches de commande (M1, M2), ce système (SO) réalisé sous forme d'une unité de calcul qui reçoit des signaux électriques détectés, dont la valeur dépend des positions desdits manches de commande (M1, M2), qui peuvent être modifiées par l'actionnement de ces derniers, et des systèmes d'information (S1, S2, S3, S4), dont chacun est associé à l'un desdits manches de commande (M1, M2),

**caractérisé en ce que** ledit système de détection (SO) détermine, en fonction de la valeur de ces signaux électriques, un éventuel pilotage multiple correspondant à un actionnement simultané d'au moins deux desdits manches de commande (M1, M2), et **en ce que** chacun desdits systèmes d'information (S1, S2, S3, 54) est destiné à engendrer dans son manche de commande (M1, M2) associé, lors d'un pilotage multiple détecté par ledit système de détection (SO), une sensation tactile informant du pilotage multiple, un pilote de l'aéronef qui actionne ledit manche de commande (M1, M2).

2. Dispositif selon la revendication 1,
**caractérisé en ce qu'**au moins l'un desdits systèmes d'information (S1) comporte un ensemble vibreur (8, 9) intégré dans le manche dé commande associé (M1, M2) et engendrant des vibrations dudit manche de commande (M1, M2) lors d'un pilotage multiple.

3. Dispositif selon la revendication 2,
**caractérisé en ce que** ledit ensemble vibreur comporte une massetotte (8) susceptible d'être entraînée en rotation par un moteur électrique (9).

4. Dispositif selon la revendication 3,
**caractérisé en ce que** l'on règle l'amplitude et la fréquence desdites vibrations en fonction de la vitesse de rotation dudit moteur électrique (9) et de la masse de ladite masselotte (8).

5. Dispositif selon l'une quelconque des revendications 1 à 4, pour un aéronef qui comporte des manches de commande (M1, M2) susceptibles d'être actionnés au moins autour d'un axe de commande (X-X, Y-Y), et dont chaque manche comprend au moins un moteur électrique (10, 11) qui engendre, en fonction d'un signal de commande, des sensations d'effort ressenties lors de l'actionnement dudit manche de commande (M1, M2) autour dudit axe de commande (X-X, Y-Y).

**caractérisé en ce qu'**au moins l'un desdits systèmes d'information (S2) comporte un générateur de signal électrique (14) qui engendre un signal électrique sinusoïdal, ledit signal électrique sinusoïdal étant superposé, lors d'un pilotage multiple, audit signal de commande du moteur électrique (11) de sorte que ledit moteur électrique (11) engendre alors, en plus desdites sensations d'effort, des vibrations dudit manche de commande (M1, M2).

6. Dispositif selon l'une quelconque des revendications 1 à 5, pour un aéronef qui comporte des manches de commande (M1, M2) susceptibles d'être actionnés au moins autour d'un axe de commande (X-X, Y-Y), et dont chaque manche comprend au moins un moteur électrique (10, 11) qui engendre, en fonction d'un signal de commande, des sensations d'effort ressenties lors de l'actionnement dudit manche de commande (M1, M2) autour dudit axe de commande (X-X, Y-Y),

**caractérisé en ce qu'**au moins l'un desdits systèmes d'information (S3) comporte un générateur de gain (17) qui engendre un gain, le signal de commande dudit moteur électrique (11) étant multiplié par ledit gain, lors d'un pilotage multiple, de manière à obtenir alors une modification desdites sensations d'effort ressenties lors de l'actionnement du manche de commande correspondant (M1, M2), autour dudit axe de commande (X-X, Y-Y).

7. Dispositif selon la revendication 6, chacun desdits manches de commande (M1, M2) pouvant être actionné autour de deux axes de commande (X-X, Y-Y) et comprenant deux moteurs électriques (10, 11) associés respectivement auxdits axes de commande (X-X, Y-Y),
**caractérisé en ce qu'**au moins l'un desdits systèmes d'information (S3) comporte deux générateurs de gain (17) associés respectivement auxdits moteurs électriques (10, 11).

8. Dispositif selon l'une des revendications 6 ou 7,
**caractérisé en ce que** ledit gain est calculé à partir de l'expression (1 +x), dans laquelle :

   - x est nul, lorsqu'au plus un seul desdits manches de commande (M1, M2) est actionné ;
   - x est compris entre 0 et -1, lorsqu'au moins deux manches de commande (M1, M2) sont actionnés simultanément et dans le même sens ; et
   - x est compris entre 0 et +1, lorsqu'au moins deux manches de commande (M1, M2) sont actionnés simultanément, mais dans des sens contraires.

9. Dispositif selon l'une quelconque des revendications 1 à 8, chacun desdits manches de commande (M1, M2) pouvant être actionné au moins autour d'un axe de commande (X-X, Y-Y),
**caractérisé en ce qu'**au moins l'un desdits systèmes d'information (S4) comporte un organe actif (20, 21) qui engendre, lors d'un pilotage multiple, des sensations d'effort ressenties lors de l'actionnement du manche de commande correspondant (M1, M2) autour de l'axe de commande (X-X, Y-Y) , les sensations d'effort ressenties pour un manche de commande (M1, M2) variant en fonction de la position d'un autre manche de commande.

10. Dispositif selon la revendication 9, chacun desdits manches de commande (M1, M2) pouvant être actionné autour de deux axes de commande (X-X, Y-Y), **caractérisé en ce qu'**au moins l'un desdits systèmes d'information (S4) comporte deux organes (20, 21) associés respectivement auxdits axes de commande (X-X, Y-Y).

11. Dispositif selon l'une quelconque des revendications précédentes, **caractérisé en ce qu'**il comporte un moyen de visualisation (V) relié audit système de détection (SO) et destiné à indiquer, au moyen de signes caractéristiques, tout pilotage multiple.

**Claims**

1. Flying aid device for a fly-by-wire aircraft which has at least two mechanically independent control columns (M1, M2), it being possible for each of the said control columns (M1, M2) to be operated to fly the said aircraft, the said device comprising a system (SO) for detecting operation of the said control columns (M1, M2), this system (SO) being produced in the form of a calculation unit which receives detected electrical signals the value of which depends on the positions of the said control columns (M1, M2), which positions can be altered by operating these control columns, and informing systems (S1, S2, S3, S4), each of which is associated with one of the said control columns (M1, M2), **characterized in that** the said detection system (SO) determines, as a function of the value of these electrical signals, any multiple control there might be, this corresponding to simultaneous operation of at least two of the said control columns (M1, M2), and **in that** each of the said informing systems (S1, S2, S3, S4) is intended to generate within its associated control column (M1, M2), when the said detection system (SO) detects multiple control, a tactile sensation that informs a pilot of the aircraft who is operating the said control column (M1, M2) of the multiple control.

2. Device according to Claim 1, **characterized in that** at least one of the said informing systems (S1 comprises a vibrator unit (8, 9) built into the associated control column (M1, M2) and causing the said control column (M1, M2) to vibrate when multiple control is occurring.

3. Device according to Claim 2, **characterized in that** the said vibrator unit comprises a flyweight (8) that can be rotated by an electric motor (9).

4. Device according to Claim 3, **characterized in that** the amplitude and frequency of the said vibrations are adjusted as a function of the rotational speed of the said electric motor (9) and the mass of the said flyweight (8).

5. Device according to any one of Claims 1 to 4, for an aircraft which has control columns (M1, M2) liable to be operated at least about one control axis (X-X, Y-Y) and each column of which comprises at least one electric motor (10, 11) which as a function of a control signal generates force sensations which are felt when the said control column (M1, M2) is operated about the said control axis (X-X, Y-Y), **characterized in that** at least one of the said informing systems (S2) comprises an electrical-signal generator (14) which generates a sinusoidal electrical signal, the said sinusoidal electrical signal being superposed, when multiple control is occurring, with the said signal controlling the electric motor (11) in such a way that the said electric motor (11) then, in addition to generating the said force sensations, causes the said control column (M1 M2) to vibrate.

6. Device according to any one of Claims 1 to 5, for an aircraft which has control columns (M1, M2) liable to be operated at least about one control-axis (X-X, Y-Y) and each column of which comprises at least one electric motor (10, 11) which as a function of a control signal generates force sensations which are felt when the said control column (M1, M2) is operated about the said control axis (X-X, Y-Y), **characterized in that** at least one of the said informing systems (S3) comprises a gain generator (17) which generates a gain, the signal for controlling the said electric motor (11) being multiplied by the said gain, when multiple control is occurring, so as to cause a change to the said force sensations felt when operating the corresponding control column (M1, M2) about the said control axis (X-X, Y-Y).

7. Device according to Claim 6, it being possible for each of the said control columns (M1, M2) to be operated about two control axes (X-X, Y-Y) and each of the said control columns comprising two electric motors (10, 11) associated respectively with the said control axes (X-X, Y-Y), **characterized in that** at least one of the said informing systems (S3) has two gain generators (17), one associated with each of the said electric motors (10, 11).

8. Device according to either of Claims 6 and 7, **char-**

**acterized in that** the said gain is calculated from the expression (1+x), in which:

- x is zero when just one at most of the said control columns (M1, M2) is being operated;
- x is between 0 and -1 when at least two control columns (M1, M2) are operated simultaneously and in the same direction; and
- x is between 0 and +1 when at least two control columns (M1, M2) are being operated simultaneously but in contrary directions.

9. Device according to any one of Claims 1 to 8; it being possible for each of the said control columns (M1, M2) to be operated at least about one control axis (X-X, Y-Y), **characterized in that** at least one of the said informing systems (S4) comprises an active member (20, 21) which, when multiple control is occurring, causes force sensations which are felt when the corresponding control column (M1, M2) is operated about the control axis (X-X, Y-Y), the force sensations felt on one control column (M1, M2) varying as a function of the position of another control column.

10. Device according to Claim 9, it being possible for each of the said control columns (M1, M2) to be operated about two control axes (X-X, Y-Y), **characterized in that** at least one of the said informing systems (S4) comprises two members (20, 21), each one associated with one of the said control axes (X-X, Y-Y).

11. Device according to any one of the preceding claims, **characterized in that** it comprises a display means (V) connected to the said detection system (SO) and intended, using characteristic signs, to indicate any multiple control.

**Patentansprüche**

1. Steuerungshilfevorrichtung für ein Flugzeug mit einem elektrischen Flugsteuerungssystem, das mindestens zwei mechanisch unabhängige Steuerknüppel (M1, M2) umfasst, wobei jeder der genannten Steuerknüppel (M1, M2) zum Steuern des genannten Flugzeugs betätigt werden kann und die genannte Vorrichtung ein Detektionssystem (SO) für die Betätigung der genannten Steuerknüppel (M1, M2) und Informationssysteme (S1, S2, S3, S4) umfasst, von denen jedes einem der genannten Steuerknüppel (M1, M2) zugeordnet ist, wobei dieses Systems (SO) in Form einer Recheneinheit ausgeführt ist, die festgestellte elektrische Signale erhält, deren Wert von den Stellungen der genannten Steuerknüppel (M1, M2) abhängt, die durch deren Betätigung geändert werden können,

dadurch gekennzeichnet, dass das genannte Detektionssystem (SO) in Abhängigkeit vom Wert dieser elektrischen Signale eine eventuelle Mehrfachsteuerung feststellt, die der gleichzeitigen Betätigung von mindesten zwei der genannten Steuerknüppel (M1, M2) entspricht, und dadurch, dass jedes der genannten Informationssysteme (S1, S2, S3, S4) in seinem zugeordneten Steuerknüppel (M1, M2) bei einer durch das genannte Detektionssystem (SO) festgestellten Mehrfachsteuerung eine Tastempfindung erzeugt, die einen Piloten des Flugzeugs, der den genannten Steuerknüppel (M1, M2) betätigt von der Mehrfachsteuerung informiert.

2. Vorrichtung gemäß Anspruch 1, **dadurch gekennzeichnet, dass** mindestens eines der genannten Informationssysteme (S1) eine Vibrationseinheit (8, 9) umfasst, die in die zugeordneten Steuerknüppel (M1, M2) integriert ist und bei einer Mehrfachsteuerung Vibrationen des genannten Steuerknüppels (M1, M2) erzeugt.

3. Vorrichtung gemäß Anspruch 2, **dadurch gekennzeichnet, dass** die genannte Vibrationseinheit einen Gusszapfen (8) umfasst, der durch einen Elektromotor (9) in Drehung versetzt werden kann.

4. Vorrichtung gemäß Anspruch 3, **dadurch gekennzeichnet, dass** Amplitude und Frequenz der genannten Vibrationen in Abhängigkeit von der Drehzahl des genannten Elektromotors (9) und der Masse des genannten Gusszapfens (8) eingestellt werden.

5. Vorrichtung gemäß einem der Ansprüche 1 bis 4 bei einem Flugzeug, das Steuerknüppel (M1, M2) umfasst, die mindestens um eine Steuerachse (X-X, Y-Y) geschwenkt werden können und von dem jeder Steuerknüppel mindestens einen Elektromotor (10, 11) umfasst, der in Abhängigkeit von einem Steuersignal Lastempfindungen erzeugt, die beim Betätigen des genannten Steuerknüppels (M1, M2) um die genannte Steuerachse (X-X, Y-Y) gefühlt werden,

dadurch gekennzeichnet, dass mindestens eines der genannten Informationssysteme (S2) einen elektrischen Signalgenerator (14) umfasst, der ein sinusförmiges elektrisches Signal erzeugt, wobei das genannte sinusförmige elektrische Signal bei einer Mehrfachsteuerung das genannte Steuersignal des Elektromotors (11) überlagert, so dass der genannte Elektromotor (11) dann zusätzlich zu den genannten Lastempfindungen Vibrationen des genannten Steuerknüppels (M1, M2) erzeugt.

6. Vorrichtung gemäß einem der Ansprüche 1 bis 5 bei einem Flugzeug, das Steuerknüppel (M1, M2) umfasst, die mindestens um eine Steuerachse (X-X, Y-Y) geschwenkt werden können und von dem jeder Steuerknüppel mindestens einen Elektromotor (10. 11) umfasst, der in Abhängigkeit von einem Steuersignal Lastempfindungen erzeugt, die beim Betätigen des genannten Steuerknüppels (M1, M2) um die genannte Steuerachse (X-X, Y-Y) gespürt werden,

**dadurch gekennzeichnet, dass** mindestens eines der genannten Informationssysteme (S3) einen Verstärkungsgenerator (17) umfasst, der eine Verstärkung erzeugt, wobei das genannte Steuersignal des genannten Elektromotors (11) bei einer Mehrfachsteuerung durch die genannte Verstärkung vervielfacht wird, so dass man dann eine Änderung der genannten Lastempfindungen erzielt, die beim Betätigen des entsprechenden Steuerknüppels (M1, M2) um die genannte Steuerachse (X-X, Y-Y) gefühlt werden.

7. Vorrichtung gemäß Anspruch 6, wobei jeder der genannten Steuerknüppel (M1, M2) um zwei Steuerachsen (X-X, Y-Y) betätigt werden kann und zwei Elektromotoren (10, 11) umfasst, die jeweils den genannten Steuerachsen (X-X, Y-Y) zugeordnet sind, **dadurch gekennzeichnet, dass** mindestens eines der genannten Informationssysteme (S3) zwei Verstärkungsgeneratoren (17) umfasst, die jeweils den genannten Elektromotoren (10, 11) zugeordnet sind.

8. Vorrichtung gemäß Anspruch 6 oder 7, **dadurch gekennzeichnet, dass** die genannte Verstärkung ausgehend vom Ausdruck (1+x) berechnet wird, in dem:

   - x Null ist, wenn höchstens einer der genannten Steuerknüppel (M1, M2) betätigt wird;
   - x zwischen 0 und -1 liegt, wenn mindestens zwei Steuerknüppel (M1, M2) gleichzeitig und in dieselbe Richtung betätigt werden; und
   - x zwischen 0 und +1 liegt, wenn mindestens zwei Steuerknüppel gleichzeitig, jedoch in gegensätzliche Richtungen betätigt werden.

9. Vorrichtung gemäß einem der Anspruche 1 bis 8, wobei jeder der genannten Steuerknüppel (M1, M2) mindestens um eine Steuerachse (X-X, Y-Y) betätigt werden kann, **dadurch gekennzeichnet, dass** mindestens eines der genannten Informationssysteme (S4) ein aktives Organ (20, 21) umfasst, das bei Mehrfachsteuerung Lastempfindungen erzeugt, die beim Betätigen des entsprechenden Steuerknüppels (M1, M2) um die Steuerachse (X-X, Y-Y) gespürt werden, wobei sich die Lastempfindungen bei einem Steuerknüppel (M1, M2) in Abhängigkeit von der Stellung eines anderen Steuerknüppels ändern.

10. Vorrichtung gemäß Anspruch 9, wobei jeder der genannten Steuerknüppel (M1, M2) um zwei Steuerachsen (X-X, Y-Y) betätigt werden kann, **dadurch gekennzeichnet, dass** mindestens eines der genannten Informationssysteme (S4) zwei aktive Organe (20, 21) umfasst, die jeweils den genannten Steuerachsen (X-X, Y-Y) zugeordnet sind.

11. Vorrichtung gemäß einem der vorstehenden Ansprüche, **dadurch gekennzeichnet, dass** es ein Anzeigemittel (V) umfasst, das mit dem genannten Detektionssystem (SO) verbunden ist und mittels Kennzeichen jegliche Mehrfachsteuerung anzeigen soll.

# FIG.1

# FIG.2

# FIG.5

## FIG. 3

M1, M2

2  X

11  Y

X  10

3  Y

5  5B

12

6

S2

15  +  16

12  13

14

## FIG. 4

M1, M2

2  X

11  Y

X  10

3  Y

5  5B

12

6

S3

18  ×  19

12  13

17